# EUROPÄISCHE PATENTSCHRIFT

(11) **EP 2 788 967 B1**
(45) Veröffentlichungstag und Bekanntmachung des Hinweises auf die Patenterteilung: **16.09.2015**
(21) Anmeldenummer: 12797795.7
(22) Anmeldetag: 20.11.2012
(51) Int. Cl.: G08G 1/16, B60Q 1/52, B60W 30/08, B60Q 9/00, B60Q 5/00

(54) **VERFAHREN ZUR ÜBERWACHUNG UND SIGNALISIERUNG EINER VERKEHRSSITUATION IM UMFELD EINES FAHRZEUGES**
METHOD FOR MONITORING AND SIGNALING A TRAFFIC SITUATION IN THE SURROUNDINGS OF A VEHICLE
PROCÉDÉ PERMETTANT DE SURVEILLER ET DE SIGNALER UNE SITUATION DE CIRCULATION DANS L'ENVIRONNEMENT D'UN VÉHICULE

(30) Priorität: 06.12.2011 DE 102011087774
(43) Veröffentlichungstag der Anmeldung: 15.10.2014
(73) Patentinhaber: Robert Bosch GmbH, 70442 Stuttgart (DE)
(72) Erfinder: LEHNER, Philipp, 74372 Sersheim (DE); SCHUMANN, Michael, 70597 Stuttgart (DE); NIEMZ, Volker, 71277 Rutesheim (DE); KANTER, Pascal, 71272 Renningen (DE)
(86) Internationale Anmeldenummer: PCT/EP2012/073094
(87) Internationale Veröffentlichungsnummer: WO 2013/083399

(56) Entgegenhaltungen:
- DE-A1- 10 257 842
- DE-A1-102005 056 647
- DE-A1-102010 001 954
- US-B2- 7 440 823

## Beschreibung

### Stand der Technik

Die Erfindung betrifft ein Verfahren und ein Fahrerassistenzsystem zur Überwachung und Signalisierung einer Verkehrssituation im Umfeld eines Fahrzeuges zur Verhinderung von Unfällen mit dem Fahrzeug.

Es besteht ein starkes Interesse daran, Unfälle zu vermeiden, die durch ein Rücksetzen des Fahrzeugs entstehen, etwa durch Überfahren eines Fußgängers oder Fahrradfahrers oder durch eine Kollision mit einem ortsfesten Gegenstand. Die DE 10 2009 052589 A1 zeigt ein System zur Überwachung und Signalisierung einer Verkehrssituation im Umfeld eines Fahrzeuges, das ausgestattet ist, um einen sich in der Umgebung des Fahrzeug befindlichen anderen Verkehrsteilnehmer mittels geeigneter Mittel zu warnen, wenn eine kritische Situation vorliegt. Ein Ultraschallsystem ermittelt eine kritische Situation, wenn sich das eigene Fahrzeug beispielsweise in einem semlautonomen Fahrvorgang oder etwa in einem Rangierbetrieb befindet und zusätzlich zumindest ein anderer Verkehrsteilnehmer in der Umgebung des eigenen Fahrzeugs präsent ist. Bei Vorliegen einer derartigen kritischen Situation können optische Signaleinrichtungen, wie Wamblinkleuchten des Fahrzeugs, oder akustische Signaleinrichtungen, wie z.B. die Hupe in Betrieb gesetzt werden, um den Verkehrsteilnehmer in der konkreten Gefährdungssituation bei der Rückwärtsfahrt zu warnen.

Die DE 2009 029388 A1 zeigt ein Verfahren zur Unterstützung eines Fahrers beim Einparken oder Ausparken. In Situationen, bei denen spontan ein Hindernis auftritt, wenn z.B. ein Passant hinter das einzuparkende Fahrzeug läuft, um von der Straße auf den Bürgersteig zu gelangen, wird eine Einleitung einer Notbremsung oder eine Ausgabe einer Warnung an den Fahrer vorgeschlagen und gefährdungsminimierende Maßnahmen wie eine optische oder akustische Warnung zum Schutz der Personen in der Fahrzeugumgebung werden ausgeführt.

Nachteilig an den Systemen im Stand der Technik ist, dass bei den Ultraschallsystemen erst eine Objektplausibilisierung über mehrere Zyklen erfolgt, bis festgestellt wird, dass ein gefährdetes Objekt ein potentielles Kollisionsobjekt darstellt. In diesem Zeitraum vergehen kostbare Sekunden, welche gefährdeten Verkehrsteilnehmern in der Fahrzeugumgebung in bestimmten Verkehrssituationen lebensrettend sein könnten.

Weitere gattungsgemäße Verfahren sind aus der DE 102010001954 A1 und der US 7 440 823 B2 bekannt.

Der Erfindung liegt die Aufgabe zugrunde, ein Verfahren vorzuschlagen, das Unfälle mit Verkehrsteilnehmern und einem Fahrzeug effektiv durch frühzeitiges Eingreifen verhindert.

### Offenbarung der Erfindung

Die Aufgabe wird gelöst durch ein Verfahren mit den Merkmalen nach dem Anspruch 1 und durch ein Fahrerassistenzsystem mit den Merkmalen nach dem Anspruch 9. Vorteilhafte Weiterbildungen der Erfindung sind in den abhängigen Ansprüchen definiert.

Demnach ist vorgesehen, dass bei einem Verfahren zur Überwachung und Signalisierung einer Verkehrssituation im Umfeld eines Fahrzeugessensoren eine Umgebung des Fahrzeugs erfassen, ein gefährdetes Objekt in der erfassten Umgebung erkannt wird, für das erkannte gefährdete Objekt eine Kollisionswahrscheinlichkeit und eine Aussagesicherheit ermittelt wird und wobei bei gegebener Kollisionswahrscheinlichkeit und einer niedrigen Aussagesicherheit eine Aktion eines ersten Typs ausgeführt wird und bei gegebener Kollisionswahrscheinlichkeit und einer hohen Aussagesicherheit eine Aktion eines zweiten Typs ausgeführt wird.

### Vorteile der Erfindung

Erfindungsgemäß weisen die Sensoren eine Stereokamera auf. Besonders vorteilhaft ist, dass auf Bildern eines optischen Sensors ein gefährdetes Objekt in sehr kurzer Zeit erkannt werden kann. Die Bildrate bei dem optischen System kann zwischen 15 Hz und 35 Hz liegen oder noch darüber. Um ein echtzeitfähiges System zu gewährleisten, sollten mindestens 25 Hz Bildrate gewählt werden.

Die Erkennung des gefährdeten Objekts auf den Bildern des optischen Sensors kann Methoden zur Berechnung des optischen Flusses auf erfassten Digitalbildern umfassen, dessen Vektorfeld die Bewegung eines Pixels zwischen zwei Zeitpunkten, insbesondere zu den Zeitpunkten t und t-1 beschreibt. Wenn sich eine Ansammlung von Flussvektoren, d.h. ein segmentierter zusammenhängender Bereich, deutlich anders bewegt als das umgebende, insbesondere von einer Eigenbewegung des Fahrzeugs bereinigte Feld, dann kann hieraus auf ein sich selbst bewegendes Objekt geschlossen werden. Da bei der Berechnung des eigenbewegungsbereinigten Fluss-Feldes immer auch eine Oberflächenannahme gemacht werden muss, stechen auch statische und gleichzeitig erhabene Objekte aus dem Fluss-Feld heraus. Allerdings unterscheiden sich selbstbewegte Objekte in der Regel klar von statischen, somit ist eine Detektion hier möglich. Die Erkennung des gefährdeten Objekts auf den Bildern erfaßt erfindungsgemäß ein texturbasiertes Verfahren, bei welchem mittels Klassifikatoren Objekte erkannt werden können, insbesondere bei welchem mittels trainierter Klassifikatoren Objekte erkannt werden können, die die Klassifikatoren gelernt haben. Die Klassifikatoren vergleichen hierbei gewisse Merkmale des Bildes an bestimmten Positionen, sogenannten regions of interest (ROI) mit abgespeicherten und/oder gelernten Merkmalen und gewichten deren Ähnlichkeit zueinander. Übersteigt die Ähnlichkeit eine Schwelle zu einer Klasse, wird die ROI entsprechend klassifiziert. Die Ermittlung der ROIs kann hierbei wiederum mittels verschiedener Verfahren erfolgen, z.B. im Stereo-Fall über die Position einer 3D-Häufung. Die Erkennung des gefährdeten Objekts auf den Bildern erfolgt erfindungsgemäß über von Stereokameras gewonnenen 3D-Informationen . Besonders vorteilhaft sind kombinationen der genannten Methoden, da sie sehr robust arbeiten können. Auf diese Weise kann ein gefährdetes Objekt bereits innerhalb von wenigen Hundertstelsekunden detektiert werden.

Das gefährdete Objekt kann ein beliebiger Verkehrsteilnehmer sein, insbesondere ein Fußgänger, ein Fahrradfahrer, ein Fahrzeug, ein Tier oder dergleichen. Das gefährdete Objekt kann ein selbst bewegliches Objekt sein, welches besonders gut über die Methode des optischen Flusses erkannt werden kann oder es kann ein unbewegliches Objekt sein, beispielsweise ein stehender Fußgänger, welcher in eine andere Richtung blickt und das herannahende Fahrzeug übersieht. Das unbewegliche Objekt kann besonders gut über texturbasierte oder über 3D-Informationen erkannt werden.

Bevorzugt wird das erkannte gefährdete Objekt klassifiziert und ein Klassifikationsparameter festgelegt. Die Klassifikation ist besonders vorteilhaft, wenn ein texturbasiertes Bilderkennungsverfahren zur Erkennung des gefährdeten Objekts angewendet wird, welches bei der Erkennung des Objekts bereits eine Klassifikation anwendet. Auch bei Stereokameras muss zur Klassifikation ein texturbasiertes Verfahren verwendet werden. Dabei kann insbesondere eine hohe Kritikalitätsklasse vorgesehen sein, welche z.B. Fußgänger, Fahrradfahrer und Fahrzeuge umfasst, und eine niedrige Kritikalitätsklasse, welche feststehende Hindernisse umfasst, die trotzdem als gefährdetes Objekt erkannt wurden, weil sie beispielsweise einen optischen Fluss auf den Bildern des optischen Sensors erzeugen, beispielsweise aufschwenkende Türen stehender Fahrzeuge oder vom Wind bewegte Äste von Bäumen oder Pflanzen.

Bevorzugt umfasst die Aktion des ersten Typs eine Abgabe eines akustischen und/oder optischen Warnsignals an das erkannte gefährdete Objekt. Besonders vorteilhaft ist dabei, dass die akustische und/oder optische Warnung an das erkannte gefährdete Objekt keinen wesentlichen Eingriff in das Verkehrsgeschehen bedeutet. Der Fahrer des Fahrzeugs und andere Verkehrsteilnehmer werden nicht durch ein abruptes Fahrzeugmanöver erschreckt, wie etwa durch eine Bremsung oder durch eine Ausweichbewegung. Eine optische Warnung kann beispielsweise ein einfaches oder mehrfaches Aufblinken der rückwärtigen Warnblinkanlage oder weiterer rückwärtig angeordneter Leuchteinrichtungen wie Rücklichter, Bremslichter oder die Nebelschlussleuchte umfassen, wobei das Aufblinken sowohl gleichphasig links und rechts als auch im Wechsel links und rechts ausgeführt sein kann. Eine akustische Warnung kann eine Betätigung einer Hupe und/oder die Auslösung eines dauerhaften oder periodischen Piepsignals umfassen, wobei ein Sender des Piepsignals insbesondere im Fahrzeugaußenraum angeordnet sein kann und speziell zur Ausgabe des Warnsignals dienen kann oder für weitere Zwecke einsetzbar sein kann.

Bevorzugt umfasst die Aktion des ersten Typs eine Abgabe eines akustischen und/oder optischen und/oder haptischen Warnsignals an den Fahrer des Fahrzeugs. Hierdurch wird der Fahrer in die Situation versetzt, dass er selbst auf die Gefahr reagieren kann. Das akustische Signal kann eine Auslösung eines dauerhaften oder periodischen Piepsignals umfassen, wobei ein Sender des Piepsignals bevorzugt im Fahrzeuginneren angeordnet ist, und/oder eine Lautstärkeabregelung des Autoradios und/oder eine Sprachnachricht beispielsweise über Autoradioboxen. Ein optisches Warnsignal kann beispielsweise eine Einblendung eines Warnsignals auf einem Head-Up-Display oder auf einem Head-Down-Display umfassen. Die Einblendung kann eine Hervorhebung, beispielsweise eine farbliche Hervorhebung oder ein Blinken des erkannten Objekts auf einem Kamerabild umfassen und/oder ein farblich hervorgehobenes und/oder blinkendes Warnsymbol, beispielsweise ein Icon auf einem Kamerabild. Das haptische Signal kann eine Vibration umfassen, die ggf. wiederholt in einem Zeitraum von wenigen Sekunden auf das Lenkrad wirkt und die vom Fahrer spürbar ist.

In dem Fall, wenn Objekte einer niedrigen Kritikalitätsklasse detektiert wurden, kann die Aktion des ersten Typs sein, keine Warnung an das gefährdete Objekt abzugeben, sondern nur ein akustisches und/oder optisches und/oder haptisches Warnsignal an den Fahrer abzugeben. In dem Fall, wenn Objekte einer hohen Kritikalitätsklasse detektiert wurden, kann die Aktion ersten Typs sein, eine akustische und/oder eine optische Warnung an den Verkehrsteilnehmer abzugeben und gleichzeitig ein akustisches und/oder optisches und/oder haptisches Warnsignal an den Fahrer abzugeben.

Nach Ausführung der Aktion des ersten Typs, beispielsweise nach Abgabe einer akustischen und/optischen Warnung an den Verkehrsteilnehmer und/oder nach Abgabe eines akustischen und/oder optischen und/oder haptischen Warnsignals an den Fahrer, kann eine weitere Aktion durchgeführt werden, beispielsweise wiederum eine akustische und/oder eine optische Warnung an den Verkehrsteilnehmer und/oder ein akustisches und/oder optisches und/oder haptisches Warnsignal an den Fahrer, wenn sich die Situation nicht entspannt hat und die Aussagesicherheit weiterhin gering ist oder es kann eine Aktion des zweiten Typs ausgeführt werden, wenn sich die Aussagesicherheit erhöht hat. Der zeitliche Abstand der aufeinanderfolgenden Warnsignale kann unmittelbar anschließend oder auf eine Pause von wenigen, beispielsweise 1 bis 5, insbesondere 1 bis 3 Sekunden festgelegt sein.

Bevorzugt umfasst die Aktion des zweiten Typs einen Eingriff in den Antriebsstrang des Fahrzeugs, insbesondere eine Einleitung einer Bremsung des Fahrzeugs. Bevorzugt wird die Kupplung des Fahrzeugs vor Betätigung der Bremse betätigt und ein Gang gelöst. Besonders vorteilhaft ist, dass es hierdurch zu einem Stopp des Fahrzeugs kommt, wodurch sich die kritische Situation entspannt.

Die gegebene Kollisionswahrscheinlichkeit kann den Umstand betreffen, dass das erkannte gefährdete Objekt sich in einem Fahrschlauch oder in einem Gefährdungsbereich des Fahrzeugs befindet oder sich darein zu begeben droht. Die gegebene Kollisionswahrscheinlichkeit kann auch den Umstand betreffen, dass eine dem erkannten, gefährdeten Objekt zugeordnete Zeit bis zur Kollision einen definierten Wert, insbesondere 3 s, 2 s oder 1 s unterschritten hat.

Das Verfahren wird vorzugsweise im Rahmen einer *back over avoidance*, d.h. einer Vermeidung von Überfahren von Verkehrsteilnehmern im Rückwärtsgang eingesetzt und/oder als Teil einer Parkassistenzeinrichtung. Besonders bevorzugt werden bei einer Rückwärtsfahrt im Rückwärtsgang die optischen und/oder akustischen Warnsignale an das gefährdete Objekt lediglich im Heckbereich des Fahrzeugs abgegeben. Das ist dahingehend vorteilhaft, als dass sich das Signal von einem gewöhnlichen Signal der Warnblinkanlage und von einem Signal des Autoalarms unterscheidet, bei welchen sowohl im Frontbereich als auch im Heckbereich des Fahrzeugs und ggf. im Seitenbereich des Fahrzeugs Leuchteinrichtungen, insbesondere die Blinker blinken, so dass das Warnsignal noch stärker die Aufmerksamkeit des Verkehrsteilnehmers erregen wird. Hierzu kann im heckseitigen Fahrzeugbereich ein Sender eines Piepsignals eigens zu dem Zweck der Warnung der Verkehrsteilnehmer vorgesehen sein.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Modul zur Implementierung eines Fahrerassistenzsystems oder eines Subsystems hiervon in einem Fahrzeug handeln oder um eine Applikation für Fahrerassistenzfunktionen, welches auf einem Smartphone ausführbar ist. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-Rom, DVD oder einem USB-Stick. Zusätzlich oder alternativ kann das Computerprogramm auf einer Computereinrichtung wie etwa auf einem Server zum Herunterladen bereitgestellt werden, z.B. über ein Datennetzwerk wie etwa das Internet oder eine Kommunikationsverbindung wie etwa eine Telefonleitung oder eine drahtlose Verbindung.

Erfindungsgemäß ist außerdem ein Fahrerassistenzsystem zur Ausführung eines der beschriebenen Verfahren vorgesehen, aufweisend
Sensoren zur Erfassung einer Fahrzeugumgebung darunter eine Stereokamera,
- eine Komponente zur Erkennung von Objekten in der erfassten Umgebung,
- eine Komponente zur Ermittlung einer Aussagesicherheit über ein in der Umgebung erkanntes Objekt,
- eine Komponente zur Ermittlung einer Kollisionswahrscheinlichkeit des erkannten Objekts mit dem Fahrzeug und
- eine Komponente zur Ausführung einer Aktion eines ersten Typs bei gegebener Kollisionswahrscheinlichkeit und einer niedrigen Aussagesicherheit und einer Aktion eines zweiten Typs bei gegebener Kollisionswahrscheinlichkeit und einer hohen Aussagesicherheit.

Bevorzugt ist ein Sensor zur Erfassung der Fahrzeugumgebung als ein Teil eines Videosysterns ausgebildet, welches ein Bild einer Umgebung des Fahrzeugs aufnimmt. Das Fahrerassistenzsystem weist erfindungsgemäß weitere Sensoren zur Aufnahme einer. Fahrzeugumgebung auf, nämlich einen Ultraschallsensor.

Das Fahrerassistenzsystem weist erfindungsgemäß eine Fusionskomponente auf, welche die Daten der Stereokamera mit den Daten des Ultraschallsensors kombiniert und weiterverarbeitet, wobei diese beispielsweise an eine Anzeige oder einem Kollisionsüberwachungssystem übermittelt werden können. Die durch das Ultraschall und/oder das Videosystem gewonnene Information über die Fahrzeugumgebung können so, z.B. als 3D-Bild der Umgebung aus einer Top-View oder aus der Fahrerperspektive an den Fahrer ausgegeben werden, wobei das detektierte Objekt besonders kenntlich gemacht werden kann.

Die Komponente zur Ausführung der Aktion des ersten und/oder des zweiten Typs ist bevorzugt an optische, akustische und/oder haptische Warnsignalgeber und/oder an einen Antriebsstrang des Fahrzeugs gekoppelt, die von der Komponente zur Ausführung der Aktion des ersten und/oder des zweiten Typs angesteuert werden kann.

Weitere Ausführungsbeispiele und Vorteile der Erfindung werden nachfolgend mit Bezug auf die Zeichnung beschrieben.

### Kurze Beschreibung der Zeichnungen

Es zeigen
- Figur 1: eine schematische Darstellung funktionaler Komponenten einer Datenverarbeitungsanlage in einem Fahrzeug und
- Figur 2: eine Draufsicht einer Situation mit einem Fahrzeug und einem Verkehrsteilnehmer.

### Ausführungsformen der Erfindung

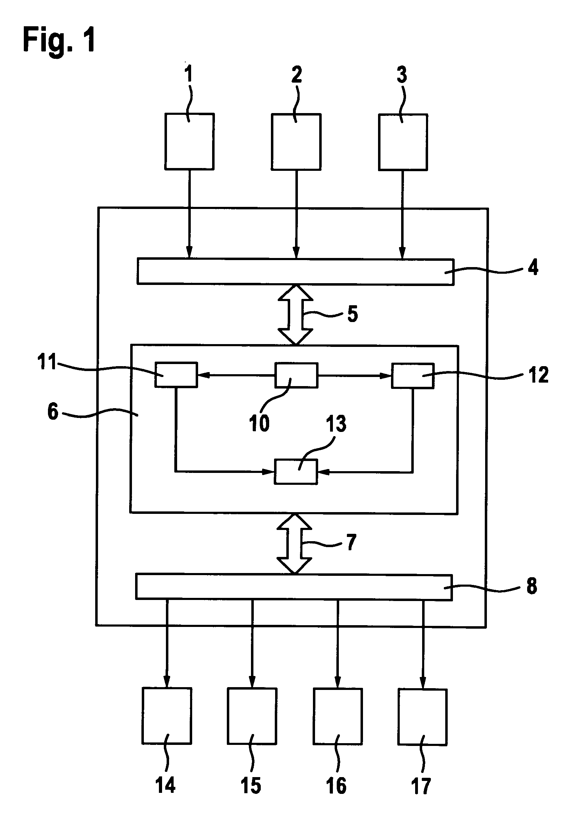

Figur 1 zeigt eine schematische Darstellung funktionaler Komponenten eines Fahrerassistenzsystems gemäß der vorliegenden Erfindung. Das Fahrerassistenzsystem ist dazu ausgebildet, aus Daten eines Sensors ein Objekt in einer Umgebung eines Fahrzeugs zu erkennen, eine Aussagesicherheit über das Objekt zu ermitteln und eine Aktion eines ersten Typs bei gegebener Kollisionswahrscheinlichkeit und einer niedrigen Aussagesicherheit und eine Aktion eines zweiten Typs bei gegebener Kollisionswahrscheinlichkeit und einer hohen Aussagesicherheit auszuführen.

Das Fahrerassistenzsystem umfasst hierzu Bildsensoren eines optischen Sensorsystems 1, welche als Monokular- oder Stereovideokameras ausgebildet sein können. Das Fahrerassistenzsystem umfasst außerdem ein Ultraschallsensorsystem 2, sowie weitere Sensoren, insbesondere eine Fahrzeugdatensensorik 3. Die Signale des optischen Sensorsystems 1, des Ultraschallsensorsystems 2 und der Fahrzeugdatensensorik 3 werden in einer Eingangsschaltung 4 empfangen. Die Eingangsschaltung 4 ist mit einem Bussystem 5 zum Datenaustausch mit einer Datenverarbeitungseinrichtung 6 verbunden. Die Datenverarbeitungseinrichtung 6 ist mit einem weiteren 7 oder demselben 5 Bussystem mit einer Ausgangsschaltung 8 verbunden.

Die Datenverarbeitungseinrichtung 6 umfasst eine Komponente 10 zur Erkennung eines Objekts in der Umgebung des Fahrzeugs, welche insbesondere die Daten des optischen Sensorsystems 1 und/oder des Ultraschallsensorsystems 2 verarbeitet. Die Komponente 10 zur Erkennung eines Objekts verwendet bei der Verarbeitung der Daten des optischen Sensorsystems 1 bekanntermaßen beispielsweise Bildinformationen wie optische Kontraste oder aus Bildfolgen gewonnene Vektorflüsse (optischer Fluss) und/oder von stereoskopischen Kameras gewonnene 3D-Information.

Die Datenverarbeitungseinrichtung 6 umfasst weiterhin eine Komponente 11 zur Ermittlung einer Aussagesicherheit über ein erkanntes Objekt, welche Daten des optischen Sensorsystems 1 und/oder des Ultraschalisensorsystems 2 direkt verarbeiten kann und/oder Daten der Komponente 10 zur Erkennung des Objekts verwenden kann. Die Komponente 11 zur Ermittlung der Aussagesicherheit über ein erkanntes Objekt weist einem erkannten Objekt zunächst eine niedrige Aussagesicherheit zu. Wenn sich das erkannte Objekt über mehrere Objekterkennungszyklen und/oder Erkennungsmethoden, wie optischer Fluss, konturbasiert oder 3D, plausibilisiert, weist die Komponente 11 zur Ermittlung der Aussagesicherheit dem Objekt eine hohe Aussagesicherheit zu. Wenn sich das Objekt über mehrere Umfelderfassungssysteme, d.h. beispielsweise über eine Kamera, ein Ultraschallsystem und/oder über Nahfeldradar plausibilisiert, weist eine Komponente 11 zur Ermittlung der Aussagesicherheit dem Objekt ebenfalls eine hohe Aussagesicherheit zu.

Die Datenverarbeitungseinrichtung 6 umfasst außerdem eine Komponente 12 zur Ermittlung einer Kollisionswahrscheinlichkeit mit einem erkannten Objekt, welche Daten des optischen Sensorsystems 1 und/oder des Ultraschallsensorsystems 2 verarbeiten kann und/oder Daten der Komponente 10 zur Erkennung des Objekts verwenden kann. Aus den Daten der Fahrzeugdatensensorik 3 lässt sich eine Fahrzeuggeschwindigkeit des Fahrzeugs bestimmen. Die Komponente 12 zur Ermittlung der Kollisionswahrscheinlichkeit verarbeitet diese und außerdem weitere Daten der Fahrzeugdatensensorik 3 über einen Reifenstand des Fahrzeugs, wobei aus dem Reifenstand und der Fahrzeuggeschwindigkeit sich ein Fahrschlauch des Fahrzeugs bestimmen lässt, d.h. ein vom Fahrzeug in einer definierten Zeit zukünftig überrollter Streckenabschnitt.

Eine Kollisionswahrscheinlichkeit kann dann gegeben sein, wenn sich ein erkanntes Objekt in dem berechneten Fahrschlauch des Fahrzeugs befindet. Außerdem wird, soweit dies aus den empfangenen Signalen bereits möglich ist, eine Bewegung des erkannten Objekts extrapoliert und eine potenzielle Trajektorie des erkannten Objekts ermittelt. Eine Kollisionswahrscheinlichkeit kann darüber hinaus dann gegeben sein, wenn sich auf Grund der potenziellen Trajektorie des erkannten Objekts prädizieren lässt, dass es sich zukünftig in dem berechneten Fahrschlauch des Fahrzeugs befinden wird. Von der Komponente 12 zur Ermittlung der Kollisionswahrscheinlichkeit wird für das erkannte Objekt eine TTC, *"time to collision"*, d.h. eine Zeit bis zu einer bevorstehenden Kollision des Fahrzeugs mit dem erkannten Objekt berechnet. Wenn die berechnete TTC unter einem festgelegten Wert liegt, welcher beispielsweise 3 s, 2 s oder 1 s sein kann, dann wird eine Kollisionswahrscheinlichkeit des Fahrzeugs mit dem erkannten Objekt als gegeben angenommen. Die Kollisionswahrscheinlichkeit kann also insbesondere dann bereits angenommen werden, wenn das erkannte Objekt noch nicht hinreichend plausibilisiert wurde, da die Komponente 12 zur Ermittlung der Kollisionswahrscheinlichkeit unabhängig von der Komponente 11 zur Ermittlung der Aussagesicherheit arbeiten kann.

Die Datenverarbeitungseinrichtung 6 umfasst weiterhin eine Komponente 13, welche insbesondere in Abhängigkeit von Signalen der Komponente 11 zur Ermittlung der Aussagesicherheit über das erkannte Objekt und von Signalen der Komponente 12 zur Ermittlung der Kollisionswahrscheinlichkeit mit dem erkannten Objekt die Ausgangsschaltung 8 ansteuern kann. Über die Ausgangsschaltung 8 sind optische Signalgeber 14, akustische Signalgeber 15, haptische Signalgeber 16, eine Bremseinrichtung 17 und ggf. weitere Fahrzeugkomponenten wie beispielsweise eine Motorsteuerung oder eine Kupplung steuerbar.

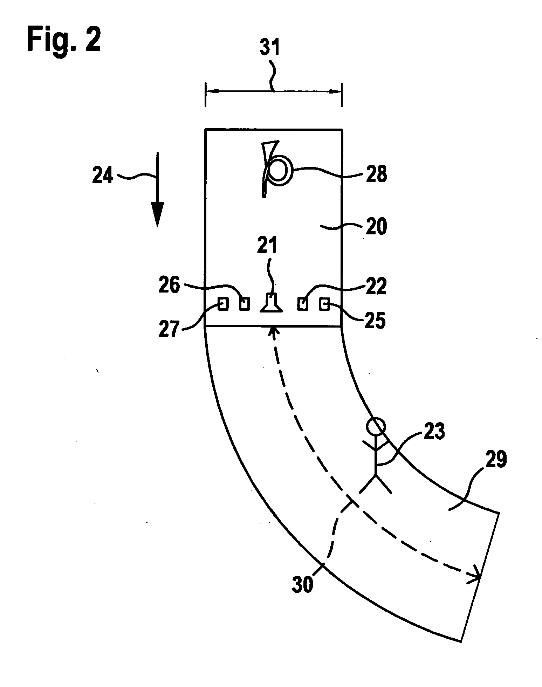

Figur 2 zeigt in Draufsicht eine Situation mit einem Fahrzeug 20 und einem Verkehrsteilnehmer 23. Das Fahrzeug 20 befindet sich in einem durch einen Pfeil 24 angedeuteten Betriebszustand in einer Rückwärtsfahrt auf den Verkehrsteilnehmer 23 zu. Das Fahrzeug 20 ist mit einem erfindungsgemäßen Fahrerassistenzsystem, welches in Bezug auf Figur 1 beschrieben wurde, ausgestattet.

Der Verkehrsteilnehmer 23 wird beispielsweise mittels einer Rückfahrkamera 21 erfasst und von einer Komponente zur Erkennung eines Objekts in der Umgebung des Fahrzeugs erkannt. Der Verkehrsteilnehmer 23 kann zusätzlich mittels eines Ultraschallsystems 22 und/oder mittels weiterer Systeme 25, beispielsweise durch ein Nahfeldradar oder durch ein Lidarsystem, erfasst werden und von der Komponente zur Erkennung des Objekts, welche Module umfassen kann, die deren Daten auswerten, auch hierüber erkannt werden.

Weiterhin ist ein Fahrschlauch 29 dargestellt, welcher aus einer Reifenstellung des Fahrzeugs 20 und einer aktuellen Geschwindigkeit des Fahrzeugs 20 ermittelt werden kann. Der Fahrschlauch 29 hat eine Länge 30, welche sich aus der Geschwindigkeit des Fahrzeugs 20 und einer vordefinierten Reaktionszeit, beispielsweise 1 bis 3 s, errechnen lässt und eine Breite, die in etwa einer Fahrzeugbreite 31 entspricht. Alternativ dazu oder zusätzlich dazu kann mittels eines der Systeme zur Umgebungserfassung eine potentielle Fahrbahn des Fahrzeugs, beispielsweise eine Einfahrt, detektiert werden, woraus ein Gefährdungsbereich für den Verkehrsteilnehmer 23 bestimmt werden kann. Da sich der Verkehrsteilnehmer 23 in dem Fahrschlauch 29 befindet, ist im dargestellten Fall eine Kollisionswahrscheinlichkeit gegeben. Auch bei einem Aufenthalt in einem Gefährdungsbereich ist eine Kollisionswahrscheinlichkeit gegeben. Sofort nach Detektion des Verkehrsteilnehmers 23 wird diesem eine niedrige Aussagesicherheit zugewiesen. Daher wird wegen der Kollisionsgefahr eine Aktion des ersten Typs ausgeführt. Dabei kann der Verkehrsteilnehmer 23 vor dem rückwärtsfahrenden Fahrzeug 20 gewarnt werden, beispielsweise durch Beschalten von heckseitig angeordneten Leuchtmitteln 26, eines heckseitig angeordneten Piepsignalsenders 27 und/oder durch Betätigung einer Hupe 28. Außerdem kann auch der Fahrer des Fahrzeugs 20 vor dem Verkehrsteilnehmer 23 durch ein akustisches und/oder optisches und/oder haptisches Warnsignal gewarnt werden. Wird der Verkehrsteilnehmer 21 über mehrere Erkennungszyklen und/oder über mehrere Sensorsysteme 21, 22, 25 plausibilisiert, dann kann ihm eine hohe Aussagesicherheit zugewiesen werden. Bei hoher Aussagesicherheit in Verbindung mit weiterhin bestehender Kollisionsgefahr kann eine automatische Bremsung des Fahrzeugs 20 zur Abwendung der Gefahr eingeleitet werden.

## Patentansprüche

1. Verfahren zur Überwachung und Signalisierung einer Verkehrssituation im Umfeld eines Fahrzeuges (20), wobei Sensoren (1, 2, 21, 22, 25), umfassend einen ersten Sensor und einen weiteren Sensor (2, 22), insbesondere einen weiteren optischen Sensor, einen Ultraschallsensor, einen Radarsensor und/oder einen Lidarsensor, eine Umgebung des Fahrzeugs (20) erfassen, ein gefährdetes Objekt (23) in der erfassten Umgebung erkannt wird, für das erkannte gefährdete Objekt (23) eine Kollisionswahrscheinlichkeit und eine Aussagesicherheit ermittelt werden und bei gegebener Kollisionswahrscheinlichkeit und einer niedrigen Aussagesicherheit eine Aktion eines ersten Typs ausgeführt wird und bei gegebener Kollisionswahrscheinlichkeit und einer hohen Aussagesicherheit eine Aktion eines zweiten Typs ausgeführt wird, **dadurch gekennzeichnet, dass** der erste Sensor eine Stereokamera ist und das gefährdete Objekt (23) mit über die Stereokamera gewonnenen 3D-Informationen und einem texturbasierten Bilderkennungsverfahren erkannt wird.

2. Verfahren nach Anspruch 1, **dadurch gekennzeichnet, dass** die Aktion des ersten Typs eine Abgabe eines akustischen und/oder optischen Warnsignals an das erkannte gefährdete Objekt (23) umfasst.

3. Verfahren nach einem der vorhergehenden Ansprüche, **dadurch gekennzeichnet, dass** die Aktion des ersten Typs eine Abgabe eines akustischen und/oder optischen und/oder haptischen Warnsignals an den Fahrer des Fahrzeugs (20) umfasst.

4. Verfahren nach einem der vorhergehenden Ansprüche, **dadurch gekennzeichnet, dass** die Aktion des zweiten Typs einen Eingriff in den Antriebsstrang des Fahrzeugs (20) umfasst, insbesondere eine Einleitung einer Bremsung des Fahrzeugs (20).

5. Verfahren nach einem der vorhergehenden Ansprüche, **dadurch gekennzeichnet, dass** die gegebene Kollisionswahrscheinlichkeit den Umstand betrifft, dass das erkannte gefährdete Objekt (23) sich in einem Fahrschlauch (29) oder in einem Gefährdungsbereich des Fahrzeugs (20) befindet oder sich darein zu begeben droht.

6. Verfahren nach einem der vorhergehenden Ansprüche, **dadurch gekennzeichnet, dass** die gegebene Kollisionswahrscheinlichkeit den Umstand betrifft, dass eine dem erkannten, gefährdeten Objekt (23) zugeordnete Zeit bis zur Kollision einen definierten Wert, insbesondere 3 s, 2 s oder 1 s unterschritten hat.

7. Verfahren nach einem der vorhergehenden Ansprüche, **dadurch gekennzeichnet, dass** nach einer Ausführung der Aktion des ersten Typs bei gegebener Kollisionswahrscheinlichkeit und einer hohen Aussagesicherheit die Aktion des zweiten Typs ausgeführt wird.

8. Computerprogramm zur Durchführung eines der Verfahren nach einem der Ansprüche 1 bis 7, wenn das Computerprogramm auf einer programmierbaren Computereinrichtung ausgeführt wird.

9. Fahrerassistenzsystem zur Ausführung eines der Verfahren nach einem der Ansprüche 1 bis 7, aufweisend
- Sensoren (1, 2, 21, 22, 25) zur Erfassung einer Fahrzeugumgebung, umfassend einen ersten Sensor und einen weiteren Sensor (2, 22), nämlich einen Ultraschallsensor,
- eine Komponente (10) zur Erkennung on Objekten in der erfassten Umgebung,
- eine Komponente (11) zur Ermittlung einer Aussagesicherheit über ein in der Umgebung erkanntes Objekt,
- eine Komponente (12) zur Ermittlung einer Kollisionswahrscheinlichkeit des erkannten Objekts mit dem Fahrzeug (20) und
- eine Komponente (13) zur Ausführung einer Aktion eines ersten Typs bei gegebener Kollisionswahrscheinlichkeit und einer niedrigen Aussagesicherheit und einer Aktion eines zweiten Typs bei gegebener Kollisionswahrscheinlichkeit und einer hohen Aussagesicherheit,
**dadurch gekennzeichnet, dass** der erste Sensor eine Stereokamera ist und das Fahrassistenzsystem eine Fusionskomponente zur Kombination von 3D-Informationen dem Stereokamera, die einer texturbasierten Bilderkennung unterzogen werden und des Ultraschallsensors aufweist.

10. Fahrerassistenzsystem nach Anspruch 9, aufweisend einen heckseitig des Fahrzeugs (20) angeordneten akustischen Signalgeber (27).

## Claims

1. Method for monitoring and signalling a traffic situation in the surroundings of a vehicle (20), wherein sensors (1, 2, 21, 22, 25) comprising a first sensor and a further sensor (2 22), in particular a further optical sensor, an ultrasonic sensor, a radar sensor and/or a lidar sensor, sense surroundings of the vehicle (20), an endangered object (23) in the sensed surroundings is detected, a collision probability and a level of information certainty are determined for the detected endangered object (23), and in the case of a given collision probability and a low level of information certainty an action of a first type is carried out, and in the case of a given collision probability and a high level of information certainty an action of a second type is carried out, **characterized in that** the first sensor is a stereo camera and the endangered object (23) is detected with 3D information which is acquired by means of the stereo camera, and a texture-based image recognition method.

2. Method according to Claim 1, **characterized in that** the action of the first type comprises outputting an acoustic and/or optical warning signal to the detected endangered object (23).

3. Method according to one of the preceding claims, **characterized in that** the action of the first type comprises outputting an acoustic and/or optical and/or haptic warning signal to the driver of the vehicle (20).

4. Method according to one of the preceding claims, **characterized in that** the action of the second type comprises an intervention into the drive train of the vehicle (20), in particular initiation of braking of the vehicle (20).

5. Method according to one of the preceding claims, **characterized in that** the given collision probability relates to the fact that the detected endangered object (23) is located in a driving corridor (29) or in a hazardous area of the vehicle (20) or threatens to move thereto.

6. Method according to one of the preceding claims, **characterized in that** the given collision probability relates to the fact that a time up to the collision, which is assigned to the detected endangered object (23), has undershot a defined value, in particular 3 s, 2 s, or 1 s.

7. Method according to one of the preceding claims, **characterized in that** after the execution of the action of the first type in the case of a given collision probability and a high level of information certainty to the action of the second type is carried out.

8. Computer program for carrying out one of the methods according to one of Claims 1 to 7 when the computer program is executed on a programmable computer device.

9. Driver assistance system for carrying out one of the methods according to one of Claims 1 to 7 having
- sensors (1, 2, 21, 22, 25) for sensing surroundings of a vehicle comprising a first sensor and a further sensor (2, 22), specifically an ultrasonic sensor,
- a component (10) for detecting objects in the sensed surroundings,
- a component (11) for determining a level of information certainty about an object detected in the surroundings,
- a component (12) for determining a collision probability of the detected object with the vehicle (20), and
- a component (13) for carrying out an action of a first type in the case of a given collision probability and a low level of information certainty and an action of a second type in the case of a given collision probability and a high level of information certainty,
**characterized in that** the first sensor is a stereo camera and the driver assistance system has a combination component for combining 3D information of the stereo camera, which information is subjected to texture-based image recognition, and of the ultrasonic sensor.

10. Driver assistance system according to Claim 9, having an acoustic signal generator (27) which is arranged on the rear side of the vehicle (20).

## Revendications

1. Procédé permettant de surveiller et de signaler une situation de circulation dans l'environnement d'un véhicule (20), pour lequel des capteurs (1, 2, 21, 22, 25) comprenant un premier capteur et un autre capteur (2, 22), en particulier un autre capteur optique, un capteur à ultrasons, un capteur à radar et/ou un capteur lidar, saisissent un environnement du véhicule (20) un objet en danger (23) dans l'environnement détecté est identifié, une probabilité de collision et une fiabilité de prévision sont définies pour l'objet en danger (23) et une action d'un premier type est effectuée lors d'une probabilité de collision et d'une fiabilité de prévision inférieure et une action d'un deuxième type est exécutée pour une probabilité de collision donnée et une fiabilité de prévision faible, **caractérisé en ce que** le premier capteur est une caméra stéréo et l'objet en danger (23) est identifié avec des informations tridimensionnelles acquises par la caméra stéréo et un procédé d'analyse d'image basé sur la texture.

2. Procédé selon la revendication 1, **caractérisé en ce que** l'action de premier type comprend la délivrance d'un signal d'avertissement acoustique et/ou optique à l'objet en danger identifié (23).

3. Procédé selon l'une quelconque des revendications précédentes, **caractérisé en ce que** l'action du premier type comprend une délivrance d'un signal d'avertissement acoustique et/ou optique et/ou haptique à l'intention du conducteur du véhicule (20) .

4. Procédé selon l'une quelconque des revendications précédentes, **caractérisé en ce que** l'action du deuxième type comprend une intervention dans la chaîne cinématique de propulsion du véhicule (20), en particulier l'initiation d'un freinage du véhicule (20).

5. Procédé selon l'une quelconque des revendications précédentes, **caractérisé en ce que** la probabilité de collision donnée concerne la circonstance dans laquelle l'objet en danger identifié (23) se trouve dans un couloir de circulation (29) ou dans une zone de mise en danger du véhicule (20) ou menace de s'y rendre.

6. Procédé selon l'une quelconque des revendications précédentes, **caractérisé en ce que** la probabilité de collision donnée concerne la circonstance dans laquelle un temps jusqu'à la collision affecté à l'objet en danger identifié (23) a dépassé une valeur définie, en particulier 3 s, 2 s ou 1 s.

7. Procédé selon l'une quelconque des revendications précédentes, **caractérisé en ce qu'**après une exécution de l'action du premier type, l'action du deuxième type est exécutée en cas de probabilité de collision donnée et d'une fiabilité de prévision élevée.

8. Programme d'ordinateur pour exécuter un des procédés selon l'une quelconque des revendications 1 à 7, si le programme d'ordinateur est exécuté sur un système informatique programmable.

9. Système d'assistance au conducteur pour exécuter un des procédés selon l'une quelconque des revendications 1 à 7, comprenant :
- des capteurs (1, 2, 21, 22, 25) pour saisir un environnement de véhicule comprenant un premier capteur et un autre capteur (2, 22), notamment un capteur à ultrasons,
- un composant (10) pour identifier des objets dans l'environnement saisi,
- un composant (11) pour identifier une fiabilité de prévision concernant un objet identifié dans l'environnement,
- un composant (12) pour déterminer une probabilité de collision de l'objet identifié avec le véhicule (20) et
- un composant (13) pour exécuter une action d'un premier type pour une probabilité de collision donnée et une fiabilité de prévision faible et une action d'un deuxième type pour une probabilité de collision donnée et une fiabilité de prévision élevée,
**caractérisé en ce que** le premier capteur est une caméra stéréo et le système d'aide à la conduite comporte un composant de fusion pour la combinaison d'informations tridimensionnelles de la caméra stéréo, qui sont soumises à une identification d'image basée sur la texture, et du capteur à ultrasons.

10. Système d'aide à la conduite selon la revendication 9 comportant un transmetteur acoustique de signaux (27) disposé à l'arrière du véhicule (20).
